# EUROPÄISCHE PATENTSCHRIFT

(11) **EP 2 318 974 B1**
(45) Veröffentlichungstag und Bekanntmachung des Hinweises auf die Patenterteilung: **07.11.2018**
(21) Anmeldenummer: 09777804.7
(22) Anmeldetag: 11.08.2009
(51) Int. Cl.: G06F 21/00

(54) **VERFAHREN ZUM BETRIEB EINER TRANSAKTIONSBASIERTEN ABLAUFSTEUERUNG**
METHOD FOR OPERATING A TRANSACTION-BASED FLOW CONTROLLER
PROCÉDÉ PERMETTANT DE FAIRE FONCTIONNER UNE COMMANDE SÉQUENTIELLE BASÉE SUR DES TRANSACTIONS

(30) Priorität: 11.08.2008 AT 12402008
(43) Veröffentlichungstag der Anmeldung: 11.05.2011
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2009/005816
(87) Internationale Veröffentlichungsnummer: WO 2010/017957

(56) Entgegenhaltungen:
- EP-A2- 1 450 234
- DE-A1- 10 258 178
- DE-A1-102005 006 832

## Beschreibung

Die Erfindung betrifft ein Verfahren zum Betrieb einer transaktionsbasierten Ablaufsteuerung, wobei diese eine Mehrzahl von Transaktionen hinterlegt hat, die von einer Ausführungseinheit der Ablaufsteuerung ausgeführt werden und dabei eine datentechnische Informationseinheit von einer Datenquelle zu einer Datensenke übermittelt wird.

Aus dem Stand der Technik sind Ablaufsteuerungen bekannt, die bspw. aus modulartig ausgebildeten und zu einem gemeinsamen Steuerungssystem zusammen geschalteten Steuerungskomponenten gebildet sind. Des Weiteren ist es bekannt, eine Ablaufsteuerung durch eine Datenverarbeitungseinrichtung zu bilden, wobei die durchzuführenden Steuerungsschritte als Steuerungsanweisungen zumeist in einem Speichermittel der Datenverarbeitungseinrichtung hinterlegt sind. Eine Ablaufsteuerung kann nun bspw. dahingehend ausgebildet sein, die durchzuführende Steuerungsaufgabe kontinuierlich abzuarbeiten, ohne dass die Steuerungsaufgabe durch explizit erkennbare bzw. erreichbare Zustände im Steuerungsablauf gekennzeichnet ist. Eine weitere mögliche Ausbildung einer Ablaufsteuerung kann jedoch auch darin bestehen, dass eine Steuerungsaufgabe in Transaktionen unterteilt ist, die im Wesentlichen dadurch gekennzeichnet sind, dass das System von einem Ausgangszustand, durch Durchführen eines oder mehrerer Steuerungsschritte, in einen Endzustand übergeführt wird. Eine transaktionsbasierte Ablaufsteuerung zeichnet sich nun insbesondere dadurch aus, dass somit immer alle Steuerungsvorgänge die zu einer Transaktion zusammengefasst sind, eindeutig nachvollziehbar abgearbeitet werden. Somit ist eindeutig sichergestellt, dass die Ablaufsteuerung nur dann in der Abarbeitung der Steuerungsaufgabe fortfährt, wenn eine Transaktion erfolgreich abgeschlossen wurde.

Die DE 10 2005 006 832 A1 beschreibt ein Verfahren zum Betrieb einer transaktionsbasierten Ablaufsteuerung, wobei die Ablaufsteuerung eine Mehrzahl von Transaktionen hinterlegt hat, die von einer Ausführungseinheit der Ablaufsteuerung ausgeführt werden. Dabei wird eine datentechnische Informationseinheit von einer Datenquelle zu einer Datensenke übermittelt. Eine Kontrollvorrichtung berechnet aus dem geschützten Datensatz ein zweites Kontrollwort, das neben dem ersten Kontrollwort existiert. Dabei müssen das erste und zweite Kontrollwort nicht identisch sein, sondern können durch eine Abbildung ineinander überführbar sein. Mit einer Vergleichsvorrichtung werden das erste Kontrollwort und das zweite Kontrollwort miteinander verglichen. Wenn das erste und zweite Kontrollwort nicht übereinstimmen, kann ein Alarmsignal ausgegeben werden. Die so gewählte Schaltungsanordnung kann somit nur das erste und zweite Kontrollwort miteinander vergleichen, aber nicht mit dem Kontrollwort eine Informationsklassifizierung und/oder ein Identifikationsmerkmal der Datenquelle übertragen.

Die DE 102 58 178 A1 beschreibt eine Schaltung mit Sicherheitsmaßnahmen, umfassend eine Recheneinheit und eine Mehrzahl von Zwischenspeichern zum Speichern von Zwischenergebnissen. Die Recheneinheit ist so ausgebildet, dass im Betrieb ein Zwischenergebnis in die Zwischenspeicher geschrieben oder ausgelesen werden kann. Eine Überwachungseinrichtung dient zum Durchführen einer Testphase der Schaltung. Das Sichern des Zwischenergebnisses ermöglicht die Restauration des Zwischenergebnisses in dem Zwischenspeicher vor dem normalen Fortgang des Betriebes der Schaltung nach der Testphase in dem Fall, dass sich bei der Überprüfung kein Fehler ergeben hat, was auf ein Nichtvorliegen eines Angriffes rückschließen lässt.

Eine Ablaufsteuerung weist nun zumeist eine Ausführungseinheit auf, in der die einzelnen Steuerungsanweisungen abgearbeitet werden und darauf basierend, Kontroll- bzw. Steuerungsbefehle an eine Durchführungseinheit bzw. ein Aktionsmodul übergeben werden.

Diese Durchführungseinheiten setzen die erhaltenen Steuerungsbefehle anschließend in entsprechende Aktionen um. Für eine Ablaufsteuerung im Bereich sicherheitskritischer Systeme ist es nun von Bedeutung, wenn die Durchführung der Steuerungsanweisungen überwacht werden kann. Insbesondere ist es von Bedeutung, wenn ein Manipulationsversuch durch einen Dritten eindeutig erkannt werden kann. Beispielsweise kann eine Steuerungsaufgabe darin bestehen, Daten, Steuerungsanweisungen bzw. Informationseinheiten von einer Datenquelle an eine Datensenke zu übertragen. Ein potenzieller Angreifer hätte nun die Möglichkeit, sich am Kommunikationsweg zwischen der Quelle und der Senke missbräuchlich Zugang zu verschaffen, bspw. um die übertragenen Informationseinheit zu manipulieren. Bei bekannten Ablaufsteuerungen bliebe ein derartiger Manipulationsversuch unbemerkt, da die Ausführung der Steueranweisungen der Transaktion nicht überwacht wird. Als Datenquelle wird im Weiteren jedes Steuerungsmodul verstanden, vom dem eine Aktion ausgehen kann, die Teil einer Steuerungsaufgabe ist. Beispielsweise kann es sich dabei um einen Datenspeicher, ein Reglermodul, ein Sicherungsmodul oder ähnliches handeln. Gleiches gilt entsprechend angepasst für die Datensenke.

Die Aufgabe der Erfindung liegt nun darin, ein Verfahren zum Betrieb einer transaktionsbasierten Ablaufsteuerung zu schaffen, um sicherzustellen, dass Steuerungsanweisungen korrekt durchgeführt werden, insbesondere wenn dabei eine Kommunikation bzw. ein Fernwirken zwischen einer Quell- und einer Zieleinrichtung betroffen ist.

Die Aufgabe der Erfindung wird dadurch gelöst, dass bei der Abarbeitung der Steuerungsanweisungen einer Transaktion, die insbesondere eine Übertragung einer Informationseinheit von einer Datenquelle zu einer Datensenke umfasst, von der Datenquelle die gesendete datentechnische Informationseinheit, sowie von der Datensenke ein Abbild der empfangenen datentechnischen Informationseinheit, an das Transaktionsüberwachungsmodul übermittelt wird und von diesem auf Übereinstimmung geprüft wird.

Da sowohl von der Datenquelle, als auch von der Datensenke die übertragene Informationseinheit bzw. ein Abbild derselben, an das Transaktionsüberwachungsmodul übermittelt wird, kann dieses Modul nun zuverlässig feststellen, ob es am bestimmungsgemäßen Kommunikationsweg zwischen der Datenquelle und der Datensenke zu einer Verfälschung bzw. Manipulation der Informationseinheit gekommen ist. Ein potenzieller Angreifer müsste nun somit die Kommunikation zwischen der Datenquelle und der Datensenke und die Kommunikation zwischen der Datenquelle und dem Transaktionsüberwachungsmodul manipulieren, um mit dem Manipulationsversuch Erfolg haben zu können. Beispielsweise kann nun die Kommunikationsverbindung zwischen der Datenquelle und dem Transaktionsüberwachungsmodul besonders gesichert sein, sodass einem potenziellen Angreifer der Zugriff auf die Kommunikation darüber besonders erschwert wird.

Das Abbild der empfangenen datentechnischen Informationseinheit kann nun bspw. dadurch gebildet werden, dass eine Kopie der empfangenen Informationseinheit an das Transaktionsüberwachungsmodul übermittelt wird.

Das Transaktionsüberwachungsmodul kann nun zusammen mit der Ablaufsteuerung bspw. in einer Steuerungseinrichtung integriert angeordnet sein. Aus sicherheitstechnischen Überlegungen kann dieses Modul jedoch auch völlig getrennt von der Ablaufsteuerung angeordnet sein, um so einen möglichst guten Zugriffsschutz auf das Transaktionsüberwachungsmodul sicherstellen zu können. Insbesondere können bauliche Schutzmaßnahmen getroffen werden.

Der Vergleich der übermittelten Informationseinheiten kann nun bspw. dadurch durchgeführt werden, dass die beiden Informationseinheiten auf Übereinstimmung geprüft werden.

Eine transaktionsbasierte Ablaufsteuerung ist bevorzugt derart ausgebildet, dass mehr als eine Transaktion gleichzeitig ausgeführt werden kann. Dementsprechend ist auch das Transaktionsüberwachungsmodul in der Lage, gleichzeitig mehrere laufende Transaktionen zu überwachen.

Nach einer Weiterbildung kann bei einem fehlerhaften Vergleich vom Transaktionsüberwachungsmodul ein Alarmsignal abgegeben werden. Das anspruchsgemäße Alarmsignal kann nun bspw. als akustisches und/oder optisches Signal verstanden werden, um so einen Manipulationsversuch unmittelbar anzeigen zu können. Es ist jedoch auch eine Ausbildung als datentechnisches bzw. elektrotechnisches Signal möglich, das sich insbesondere über einen Kommunikationsweg verteilen und weiterleiten lässt. Ein derartiges Alarmsignal kann nun bspw. von einer Kontroll- und Überwachungseinrichtung ausgewertet werden, wobei darauf basierend, weitere Sicherungsmaßnahmen getroffen werden können. Insbesondere ist es dadurch bspw. möglich, die aktuell ablaufende Transaktion abzubrechen, um somit eine weitere Verbreitung ungültiger Informationseinheiten bzw. eine weitere Beeinflussung des Steuerungssystems zu verhindern. Mittels des Alarmsignals kann bspw. aber auch eine physische Sicherung der Ablaufsteuerung bzw. der Datenquelle und/oder der Datensenke ausgelöst werden.

Ein fehlerhaftes Vergleichsergebnis kann nun bspw. aufgrund einer exakten Übereinstimmungsprüfung ermittelt werden, es ist jedoch aber auch bspw. eine unscharfe Vergleichsoperation möglich. Ein unscharfer Vergleich ist dann von Vorteil, wenn es bei der Übermittlung der Informationseinheit von der Datenquelle zur Datensenke zu einer Veränderung der übertragenen Informationseinheit kommen kann und somit ein geringes Maß an Abweichung zulässig ist. Insbesondere kann ein unscharfer Vergleich dahingehend durchgeführt werden, dass eine bestimmte Mindestübereinstimmung erreicht werden muss, um eine korrekt durchgeführte Steuerungsaktion einer Transaktion erkennen zu können. Bei der Übertragung von der Datenquelle zur Datensenke kann die Informationseinheit ggf. signaltechnisch verändert werden, bspw. aufgrund von Schwundeffekten, Phasenfehlern, NF- und/oder HF-Einstrahlungen oder Datenfehler, ohne dass dabei eine mutwillige Manipulation stattgefunden haben muss. Aufgrund informations- und/oder steuerungstechnischer Bewertungskriterien kann nun ein Maß für eine erfolgreiche Durchführung der Transaktion, also der Informationsübertragung übermittelt werden, wobei eine erfolgreiche Transaktion bei der Vergleichsoperation durch das Transaktionsüberwachungsmodul einen bestimmten Schwellwert übersteigen muss.

Eine transaktionsbasierte Ablaufsteuerung führt die abzuarbeitenden Steuerungsinformationen der Transaktion insoweit aus, als das zu steuernde System von einem Ausgangszustand in einen Endzustand gebracht wird, wobei nach Erreichen dieses Zustandes, die Ablaufsteuerung auf weitere folgende Steuerungsanweisungen einer folgenden Transaktion wartet. Durch eine Weiterbildung, nach der bei einem korrekten Vergleich ein Freigabesignal an die Datenquelle und/oder an die Datensenke und/oder an die Ablaufsteuerung übermittelt wird, lässt sich sicherstellen, dass eine weitere Abarbeitung der Transaktion nur dann erfolgt, wenn der Vergleich durch das Transaktionsüberwachungsmodul erfolgreich war und somit die Integrität der durchgeführten Informationsübermittlung bzw. der ausgeführten Steuerungsanweisung gegeben ist. Insbesondere kann ein derartiges Freigabesignal bspw. auch als Synchronisationssignal zwischen verteilten Systemen verwendet werden. Das Transaktionsüberwachungsmodul kann nun bspw. auch dazu ausgebildet sein, Transaktionen mehrerer Ablaufsteuerung zu überwachen bzw. auszuwerten und zu synchronisieren. Insbesondere kann somit ein Transaktionsüberwachungsmodul ein größeres komplexes Steuerungssystem aus mehreren Ablaufsteuerungen überwachen. Die Ausführung der Steuerungsanweisungen einer Transaktion kann ggf. einige Zeit in Anspruch nehmen. Ein Angreifer könnte bspw. eine gefälschte Transaktion initiieren, um so das Steuerungssystem zu manipulieren. Mit der anspruchsgemäßen Weiterbildung würde ein derartiger Manipulationsversuch jedoch scheitern, da die Ablaufsteuerung bzw. das Transaktionsüberwachungsmodul diesen Manipulationsversuch erkennen würde.

Die Übertragung einer Informationseinheit kann nach einer anspruchsgemäßen Weiterbildung auch die Übertragung einer Steuerungsanweisung umfassen. Diese Weiterbildung hat nun insbesondere den Vorteil, dass neben einer reinen Durchführung einer Steuerungsanweisung bzw. Übermittlung einer Informationseinheit, auch noch individuelle Steuerungskommandos von der Datenquelle an die Datensenke übertragen werden können und somit die steuerungstechnischen Möglichkeiten der Ablaufsteuerung dahingehend wesentlich erweitert werden, dass neben einer einfachen Abarbeitung von Steuerungsanweisungen auch eine implizite Steuerungs- bzw. Kontrollmöglichkeit der Datensenke gegeben ist.

Beispielsweise kann diese Steueranweisung aber auch eine Prüfanweisung umfassen, mit der die Datensenke das Abbild der empfangenen Informationseinheit generieren soll. Mit der Steuerungsanweisung kann nun bspw. von der Ablaufsteuerung und/oder von der Datenquelle eine Anweisungsfolge an die Datensenke übermittelt werden, um somit ein individuelles Abbild der empfangenen Informationseinheit an das Transaktionsüberwachungsmodul übermitteln zu können und somit einem potenziellen Angreifer einen Manipulationsversuch dahingehend wesentlich zu erschweren, dass dieser den Zusammenhang zwischen der übertragenen Steuerungsanweisung und der Erstellung des Abbilds der Informationseinheit nicht kennt und daher eine fehlerhafte Information an das Transaktionsüberwachungsmodul übermittelt wird, wodurch der Manipulationsversuch augenscheinlich wird.

Beispielsweise kann auf der Datensenke ein Prüfmodul angeordnet sein, das aus der empfangenen Informationseinheit das Abbild nach einem hinterlegten und insbesondere eindeutigen Verfahren erstellt, wobei Details dieses Verfahrens bevorzugt nur dem Transaktionsüberwachungsmodul bekannt sind. Von der Datenquelle bzw. der Ablaufsteuerung wird bspw. eine zufällige Steuerungsanweisung übermittelt, die in das von der Datensenke erzeugte Abbild einfließt. Das Transaktionsüberwachungsmodul kann nun aus der Informationseinheit von der Datenquelle ebenfalls ein Abbild erstellen und dieses mit dem Abbild der Datensenke vergleichen.

Die Übertragung der Informationseinheit von der Datenquelle zur Datensenke kann implizit eine Codierung zur Sicherung der Übertragung enthalten, es handelt sich dabei um eine so genannte Kanalcodierung. Diese zusätzliche redundante Information kann nun bspw. derart zufällig gewählt sein, dass es einem Dritten weitestgehend nicht möglich ist, diese Zusatzinformation zu erhalten und in missbräuchlicher Absicht zu verwenden. Nach einer anspruchsgemäßen Weiterbildung wird das Abbild der empfangenen datentechnischen Informationseinheit aus der empfangenen Informationseinheit und einem Ergebnis einer Datenübernahmeprüfung generiert, wodurch die Datensenke bereits in der Lage ist, eine erste Prüfung auf Gültigkeit der Übertragung durchführen zu können. Insbesondere kann eine derartige Datenübernahmeprüfung allgemeine Übertragungsparameter wie bspw. eine korrekte Formatierung der übertragenen Informationseinheit automatisch prüfen und so einen Manipulationsversuch ebenfalls erkennen. Die Datenübernahmeprüfung kann nun bspw. auch darin bestehen, dass aus der empfangenen Informationseinheit und einer, in der Datensenke hinterlegten Prüfroutine das Ergebnis gebildet wird, wobei es einem potenziellen Angreifer ohne Kenntnis dieser internen Prüfroutinen nicht möglich ist, das Ergebnis der Datenübernahmeprüfung vorherzusehen und somit ein gültiges Antwortergebnis generieren zu können.

Eine deutliche Steigerung der Überwachungs- und Kontrollmöglichkeiten des Transaktionsüberwachungsmoduls erhält man nach einer Weiterbildung, nach der bei einem fehlerhaften Vergleich vom Transaktionsüberwachungsmodul ein bedingtes Alarmsignal abgegeben wird. Ein fehlgeschlagener Vergleich muss nicht zwangsläufig von einem Manipulationsversuch herrühren, sondern kann bspw. durch Fehler bei der Übertragung der Informationseinheit bzw. bei der Ausführung der Steuerungsanweisung der Transaktion aufgetreten sein. Ein bedingtes Alarmsignalsignal kann nun bspw. von der Ablaufsteuerung und/oder von der Datenquelle und/oder der Datensenke dahingehend ausgewertet bzw. angewendet werden, dass bspw. die aktuell laufende Transaktion unterbrochen wird und ggf. ein Neustart der Transaktion initiiert wird. Ist es bspw. zu einem Übertragungsfehler oder einer Steuerung der Übertragung gekommen, kann eine erneute Übertragung diese Störung beheben und wird somit der Vergleich erfolgreich sein. Kommt es dann jedoch erneut zu einem fehlerhaften Vergleich, können weitere Schritte eingeleitet werden, um auf diesen doppelten Übertragungs- und Ablauffehler reagieren zu können. Die anspruchsgemäße Weiterbildung ermöglicht ein wesentlich weiteres Spektrum an Reaktionsmöglichkeiten, um unnötige Alarmzustände zu vermeiden.

Ein bedingtes Alarmsignal kann jedoch auch bspw. von einer Überwachungseinrichtung dahingehend ausgewertet werden, dass die Ablaufsteuerung die folgenden Transaktionen ausführt, im Hintergrund bzw. parallel dazu Sicherungsmaßnahmen in Kraft gesetzt werden. Ein potenzieller Angreifer wird somit nichts von dem aktivierten Alarmsignalszustand bemerken und seine Manipulationsversuche fortsetzen, womit insbesondere die Wahrscheinlichkeit erhöht wird, dass der Angreifer durch die in Kraft gesetzten Alarmmaßnahmen gefunden werden kann.

Nach einer Weiterbildung kann durch ein bedingtes Alarmsignal an der Datenquelle und/oder der Datensenke und/oder der Ablaufsteuerung eine Alarmtransaktion ausgelöst werden, die bspw. einen sofortigen Betriebsstopp der Ablaufsteuerung bewirkt. Insbesondere ist es bspw. auch möglich, dass sofort bauliche bzw. technische Schutzmaßnahmen ergriffen werden, um einen Zugriff bzw. auch einen entfernten Zugriff auf die Ablaufsteuerung bzw. die Datenquelle und/oder die Datensenke verhindern zu können. Eine Alarmtransaktion ist nun insbesondere dadurch gekennzeichnet, dass diese Vorrang vor allen anderen laufenden Transaktionen hat und somit unmittelbar von der Ablaufsteuerung bzw. der Ausführungseinheit abgearbeitet wird. Somit ist sichergestellt, dass bei Erkennen eines Fehlers und somit bei Auslösung einer Alarmtransaktion, unverzüglich die entsprechenden Gegenmaßnahmen ergriffen werden, sodass es aufgrund andernfalls weiterlaufender Transaktionen zu keinem weiteren Schaden kommen kann.

Durch Beheben des Grunds, der zu diesem Alarmzustand geführt hatte kann dieser aufgehoben werden und die Ablaufsteuerung kehrt in den bestimmungsgemäßen Betriebszustand zurück. Durch entsprechende Ausbildung automatisierter Überwachungssysteme kann dies im laufenden Betrieb geschehen, ohne dass dafür ein Eingreifen einer Bedienperson erforderlich wäre. Auch lassen sich in gleicher Weise getroffene Schutzmaßnahmen automatisch wieder aufheben.

Das erfindungsgemäße Verfahren ist nun insbesondere dazu ausgebildet, mehrere parallel laufende Transaktionen überwachen zu können. Bevorzugt wirkt sich das Ergebnis der Vergleichsoperation nur auf die überwachte Transaktion aus, die weiteren parallel laufenden Transaktionen bleiben unbeeinflusst. Damit wird eine so genannte denial-of-service-Attacke verhindert. Ein Angreifer kann somit nur eine Transaktion lahm legen, die anderen Steuerungsaufgaben werden ohne Störung weiter ausgeführt. Die Vergleichsoperation kann aber bspw. die Schwere der aufgetretenen Störung mit berücksichtigen und so ggf. auch andere Transaktionen bzw. die Ablaufsteuerung beeinflussen, bspw. wenn die Integrität der anderen Transaktionen gefährdet ist.

Eine vorteilhafte Weiterbildung erhält man, wenn die Übertragung zwischen der Datenquelle und der Datensenke und/oder zwischen der Datenquelle und/oder der Datensenke und dem Transaktionsüberwachungsmodul verschlüsselt wird. Durch diese Weiterbildung erreicht man eine bedeutende Steigerung der Abhör- und Manipulationssicherheit, da somit ein direkter Zugriff und eine direkte Manipulation der übertragenen Informationseinheiten zumindest weitestgehend verhindert werden. Als Verschlüsselungsverfahren eignen sich Codierungsverfahren, bei dem die zu übertragenden Informationseinheit derart verschlüsselt wird, dass nur die befugte Datengegenstelle unter Kenntnis des entsprechenden Teilschlüssels die übertragene Informationseinheit korrekt wieder herstellen kann. Insbesondere muss ein derartiges Verschlüsselungsverfahren sicherstellen, dass die verschlüsselte Informationseinheit selbst mittels einer brute-force-Attacke nicht innerhalb eines verwertbaren Zeitraums entschlüsselt werden kann. Zur Verschlüsselung eignen sich aber auch Signalverschlüsselungsmodule, so genannte Scrambler, bei denen das übertragene Signal derart pseudozufällig zerhackt wird, dass eine Wiederherstellung des Signals und damit der übertragenen Informationseinheit ohne Kenntnis der Zerhackungsroutine nicht oder sehr schwer möglich ist. Mit dieser Weiterbildung müsste ein potenzieller Angreifer also zuerst die Verschlüsselung der Übertragung umgehen, um dann auf die übertragenen Signale bzw. Informationseinheiten zugreifen zu können, um diese manipulieren zu können. Gegebenenfalls kann für jeden Kommunikationsweg bzw. für jede Übertragungsstrecke ein eigener Schlüssel und/oder eine eigene Verschlüsselungsmethode verwendet werden. Somit sieht sich ein potentieller Angreife mit mehreren Hürden konfrontiert, da dieser jeden Kommunikationsweg einzeln und insbesondere zeitlich exakt synchronisiert manipulieren müsste, um an die übertragene Information zu gelangen.

Die Vergleichsoperation des Transaktionsüberwachungsmoduls kann nun bspw. auch dahingehend ausgebildet sein, dass eine Prüfung stattfindet, ob die Datenquelle zum Absenden dieser Informationseinheit berechtigt war. Auch kann das Transaktionsüberwachungsmodul prüfen, ob das übertragene Signal bzw. die Informationseinheit von der sendenden Datenquelle stammen kann. Daher werden gemäß einer Weiterbildung zusammen mit der Informationseinheit eine Informationsklassifizierung und/oder ein Identifikationsmerkmal der Quelle übertragen. Dieses Identifikationsmerkmal bzw. die Klassifizierung kann nun derart in die Übertragung integriert sein, dass das integrierte Merkmal nicht oder nur schwer erkennbar ist, bspw. kann ein Teil einer Verschlüsselung der Übertragung das anspruchsgemäße Merkmal umfassen. Die Informationsklassifizierung bzw. das Identifikationsmerkmal sind nun bevorzugt eindeutig ausgebildet, so dass es einem potenziellen Angreifer im Wesentlichen nicht möglich sein kann, durch Probieren aller möglichen Kombinationen im Sinn einer brute-force-Attacke das eindeutige Merkmal zu erraten. Das Identifikationsmerkmal kann bspw. eine eindeutige Kennung im Sinn eines Unique-Identifiers (UID) sein, es ist aber auch eine Ausbildung möglich, nach der das Identifikationsmerkmal aus Komponenten der Informationseinheit gebildet ist, wobei ggf. noch ein zeitabhängiges Merkmal der Datenquelle mit integriert sein kann. Bevorzugt ist das Identifikationsmerkmal derart mit der Informationseinheit verknüpft, dass eine spezifische Änderung des Inhalts der Informationseinheit durch einen Angreifer, das Identifikationsmerkmal unwiederbringlich verändert bzw. zerstört. Es wird somit verhindert, dass ein Angreifer bspw. in der Informationseinheit hinterlegte Steuerungsparameter verändert, um so die an der Datensenke auszuführende Aktion zu manipulieren.

Analog dazu ist eine Weiterbildung von Vorteil, nach der mit dem Abbild der empfangenen datentechnischen Informationseinheit, eine Informationsklassifizierung und/oder ein Identifikationsmerkmal der Datensenke übertragen wird. Mit dieser Weiterbildung ist es dem Transaktionsüberwachungsmodul ebenfalls möglich, das von der Datensenke empfangene Abbild auf Plausibilität zu prüfen, insbesondere ist jedoch eine Prüfung möglich, ob diese Datensenke eine berechtigte Datengegenstelle für die Datenquelle darstellt. Bei einem Manipulationsversuch könnte bspw. ein Dritter versuchen, eine von einer Datenquelle abgehende Informationseinheit auf eine andere als die zugewiesene Datensenke umzuleiten, bzw. einer Datensenke eine manipulierte Informationseinheit einer anderen Datenquelle zuzuspielen. Durch die Prüfung der Informationsklassifizierung bzw. des Identifikationsmerkmals der Datenquelle und/oder Datensenke durch das Transaktionsüberwachungsmodul ist es diesem möglich, die Beziehung zwischen der Datenquelle und der Datensenke zu prüfen und somit sicherzustellen, dass nur berechtigte Gegenstellen miteinander kommunizieren können.

Im Transaktionsüberwachungsmodul kann nun eine Zuordnungstabelle hinterlegt sein, mit der die Informationsklassifizierung bzw. das Identifikationsmerkmal der Datenquelle bzw. Datensenke geprüft wird, insbesondere werden die hinterlegten Beziehungen zwischen diesen Merkmalen geprüft. Durch diese Zuordnungstabelle kann das Transaktionsüberwachungsmodul Plausibilitätsprüfungen durchführen, um somit sicherzustellen, dass eine manipulierte Kommunikation zwischen der Datenquelle und der Datensenke eindeutig erkennbar wird. Diese Zuordnungstabelle kann nun bspw. hinterlegt haben, welche Signale bzw. Informationseinheiten von einer Quelle ausgesandt werden können, welche Informationseinheiten bzw. Signale an eine Datensenke eintreffen können und insbesondere welche Datenquellen und Datensenken miteinander kommunizieren dürfen.

Das Transaktionsüberwachungsmodul kann bspw. zusätzlich eine Transaktionsablaufprüfung durchführen, um festzustellen, ob in einer laufenden Transaktion Ungereimtheiten auftauchen, die auf einen möglichen Manipulationsversuch hindeuten würden. Ein Angreifer könnte bspw. in eine laufende Transaktion ein Signal bzw. eine Informationseinheit einfügen, die im Zuge einer Klassifikations- bzw. Merkmalsprüfung nicht auffällig in Erscheinung treten würde, jedoch für eine bestimmte Transaktion nicht zulässig ist. Beispielsweise könnte am Transaktionsüberwachungsmodul ein vereinfachtes Abbild bzw. Model aller möglichen bzw. der zu überwachenden Transaktionen hinterlegt sein, wodurch eine zusätzliche bzw. fehlende Transaktionskomponente sofort auffallen würde. Diese Weiterbildung fungiert wiederum als eine Art Plausibilitätsprüfung dahingehend, dass Unregelmäßigkeiten im Ablauf der Transaktionen eindeutig und zuverlässig feststellbar sind.

In eine ähnliche Richtung zielt eine Weiterbildung ab, nach der das Transaktionsüberwachungsmodul eine Sequenzprüfung durchführt, da sich dadurch auch zeitliche Abfolgen und Abläufe eindeutig überprüfen lassen. Transaktionsbasierte Ablaufsteuerung basieren zumeist auf strikten zeitlichen Abläufen, wobei sich insbesondere zwischen einzelnen Transaktionsschritten Zeitfenster festlegen lassen, in denen die einzelnen Transaktionsschritte durchgeführt werden müssen bzw. in denen entsprechende Ereignisse stattfinden müssen. Durch eine anspruchsgemäße Prüfung dieser Sequenz ist nun wiederum ein Manipulationsversuch sofort erkennbar, da sich dadurch eine Störung im Zeitablauf ergeben würde.

Einen weiteren Vorteil im Hinblick auf eine Sicherung der transaktionsbasierten Ablaufsteuerung stellt eine Weiterbildung dar, nach der das Transaktionsüberwachungsmodul eine Ablaufanweisung an die Ablaufsteuerung übermittelt, da somit unabhängig vom aktuellen Ablauf der Transaktion und insbesondere asynchron zu einem derartigen Ablauf, eine Transaktion ausgelöst werden kann, deren Verhalten und Ablauf exakt bekannt ist und somit die zu vergleichenden Ergebnisse ebenfalls eindeutig bekannt sind. Insbesondere könnte eine derartige Ablaufanweisung pseudozufällige Informationseinheiten bzw. Steuerungsanweisungen enthalten die für eine potenziellen Angreifer in nicht vorhersehbarer Art und Weise eintreffen und die bspw. in keinem erkennbaren Zusammenhang zu dem bestimmungsgemäß ablaufenden Transaktionen der Ablaufsteuerung stehen. Ein potenzieller Angreifer steht somit vor einer Mehrzahl von Hürden, die in definierter und insbesondere zeitlich exakt koordinierter und synchronisierter Art und Weise zu überwinden sind, um einen Manipulationsversuch erfolgreich durchführen zu können. Da dies zumeist mit einem außerordentlich hohen Aufwand einhergeht, lässt sich eine deutliche Steigerung der Sicherheit einer transaktionsbasierten Ablaufsteuerung erreichen. Insbesondere können somit eine Mehrzahl einzelner Manipulationsversuche zuverlässig erkannt werden und wird die Wahrscheinlichkeit für einen synchronisierten und koordinierten Angriff deutlich reduziert.

Das Transaktionsüberwachungsmodul kann aber auch eine Ablaufanweisung an die Datensenke übermitteln und so zusätzlich und ggf. basierend auf dem Ergebnis des Vergleichs, Aktionen der Datensenke beeinflussen. Beispielsweise kann zur Erhöhung der Sicherheit innerhalb der Ablaufsteuerung, ein Parameter der zur weiteren Verarbeitung der Informationseinheit an der Datensenke erforderlich ist, erst nach einem erfolgreichen Vergleich vom Transaktionsüberwachungsmodul generiert werden. Diese Weiterbildungen stellen in vorteilhafter Weise sicher, dass ein Angriff an einer einzelnen Position innerhalb der Ablaufsteuerung keine Aussicht auf Erfolg hat, da ein solcher Manipulationsversuch sofort bemerkt werden würde.

Weitere Möglichkeiten zur gegenseitigen Überprüfung einer erfolgreichen und insbesondere nicht manipulierten Übertragung stellten Weiterbildungen dar, nach denen das Transaktionsüberwachungsmodul die von der Datenquelle empfangene Informationseinheit an die Datensenke übermittelt und die Datensenke die von der Datenquelle und die vom Transaktionsüberwachungsmodul erhaltene Informationseinheit vergleicht und bei Übereinstimmung die Informationseinheit an eine Ausführungsvorrichtung der Datensenke weiterleitet. Ein Angreifer könnte das Transaktionsüberwachungsmodul manipulieren und könnte somit für jede Vergleichsprüfung ein Freigabesignal erzeugen. Durch die Weiterbildungen kann die Datensenke nun prüfen, mit welcher Informationseinheit das Transaktionsüberwachungsmodul den Vergleich durchgeführt hat. Gemäß einer Weiterbildung wird auch ein Identifikationsmerkmal mit übertragen, das derart mit der Informationseinheit verknüpft ist, das es bei einer Manipulation derselben ungültig wird. Somit ist es für die Datensenke eindeutig nachvollziehbar, ob das Transaktionsüberwachungsmodul bzw. die Übertragung von der Datenquelle zum Transaktionsmodul manipuliert wurde.

Zum besseren Verständnis der Erfindung wird diese anhand der nachfolgenden Figur näher erläutert.

Es zeigen in schematisch vereinfachter Darstellung:
Fig. 1 das erfindungsgemäße Verfahren zum Betrieb einer transaktionsbasierten Ablaufsteuerung;
Fig. 2 die gegenseitige Prüfung der korrekten Übertragung in einem Kommunikationsmodell.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

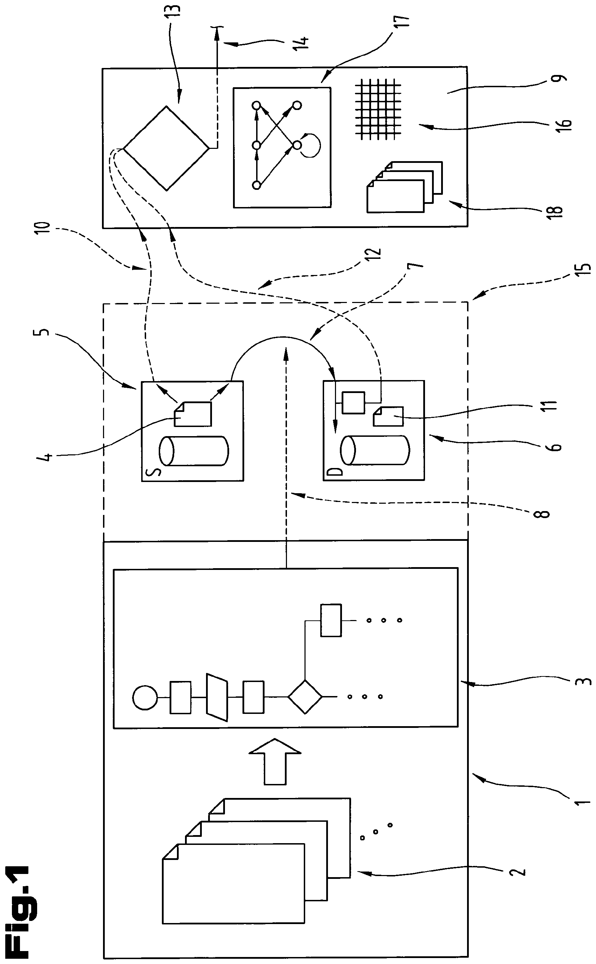

Fig. 1 zeigt ein Prinzipschaltbild des Verfahrens zum Betrieb einer transaktionsbasierten Ablaufsteuerung, wobei die Ablaufsteuerung 1 eine Mehrzahl von Transaktionen 2 hinterlegt hat, die von einer Ausführungseinheit 3 ausgeführt werden. Eine Aufgabe bzw. ein Ergebnis der Ausführung einer derartigen Transaktion liegt insbesondere darin, dass eine datentechnische Informationseinheit 4 von einer Datenquelle 5 an eine Datensenke 6 übermittelt wird 7, wobei diese Übermittlung durch die Ablaufsteuerung 1, insbesondere durch die Ausführungseinheit 3 gesteuert bzw. initiiert 8 wird.

Das Wesen der Erfindung liegt nun darin, dass von der Datenquelle 5 die gesendete datentechnische Informationseinheit 4 an ein Transaktionsüberwachungsmodul 9 übermittelt 10 wird und dass ferner auch von der Datensenke 6 ein Abbild 11 der empfangenen datentechnischen Informationseinheit an das Transaktionsüberwachungsmodul 9 übermittelt wird 12. Das Transaktionsüberwachungsmodul 9 vergleicht die übermittelten 10,12 Informationseinheiten. Basierend auf dem Ergebnis der Vergleichsoperation 13, wird vom Transaktionsüberwachungsmodul 9 ein Kontrollsignal 14 abgegeben, welches ggf. von einem Sicherheitsüberwachungsmodul und/oder der Ablaufsteuerung und/oder der Datenquelle bzw. Datensenke ausgewertet werden kann. Bei einem positiven Vergleich ist nun weitestgehend sichergestellt, dass die Übertragung 7 von der Datenquelle 5 zur Datensenke 6, ohne Beeinflussung bzw. Störung erfolgte.

Eine transaktionsbasierte Ablaufsteuerung 1 ist dadurch gekennzeichnet, dass die Steuerungsaufgabe in Transaktionen unterteilt bzw. aufgeteilt ist, wobei insbesondere jede Transaktion das zu steuernde System 15 durch Ausführung der in der Transaktion hinterlegten Steuerungsanweisungen, von einem Ausgangszustand in einem Endzustand überführt. Die Ablaufsteuerung 1 kann nun bspw. Teil des Steuerungssystems 15 sein, es ist jedoch auch möglich, dass das Steuerungssystem 15, insbesondere die Datenquelle 5 und die Datensenke 6 als von der Ablaufsteuerung 1 abgesetzte Funktionseinheiten ausgebildet sind und die Ablaufsteuerung 1 somit nur über die Durchführungsanweisung 8 Zugriff bzw. Kontrolle auf das Steuerungssystem 15 hat. Gemäß einer bevorzugten Ausbildung ist die transaktionsbasierte Ablaufsteuerung 1 durch eine Datenverarbeitungseinrichtung gebildet, welches ein, in einem Speichermittel hinterlegtes Anweisungskonstrukt ausführt und somit die Ablaufsteuerung bildet. Das Steuerungssystem 15 ist bevorzugt als Verbund zumindest einer Ablaufsteuerung zusammen mit elektronischen Datenspeichern gebildet, insbesondere als ein System verteilter Datenspeicher, wobei ein verteiltes System auch eine örtlich distanzierte Anordnung mit umfasst. Für Steuerungssysteme die aufgrund ihrer Komplexität bzw. örtlichen und räumlichen Ausdehnung nicht in einer geschlossenen Umgebung betrieben werden können ist es von ganz besonderer Bedeutung, wenn die Durchführung der Steuerungsaufgabe durch eine externe Einrichtung überprüft und kontrolliert werden kann. Bei komplexen Steuerungssystem, insbesondere wenn diese im Bereich sicherheitskritischer Anwendungen eingesetzt werden, besteht immer die Gefahr, dass sich unbefugte Dritte Zugang zum Steuerungssystem und insbesondere Zugang zu übertragenen Informationseinheiten bzw. Steuerungsanweisungen verschaffen versuchen. Beispielsweise kann durch Ausspionieren der übertragenen Informationseinheiten ein unbefugter Dritter im Besitz sicherheitstechnischer relevanter Informationen gelangen. Durch Zugriff und Manipulation auf Steuerungsanweisungen kann ein Steuerungssystem derart manipuliert werden, dass es zu einem beträchtlichen Schaden kommen kann.

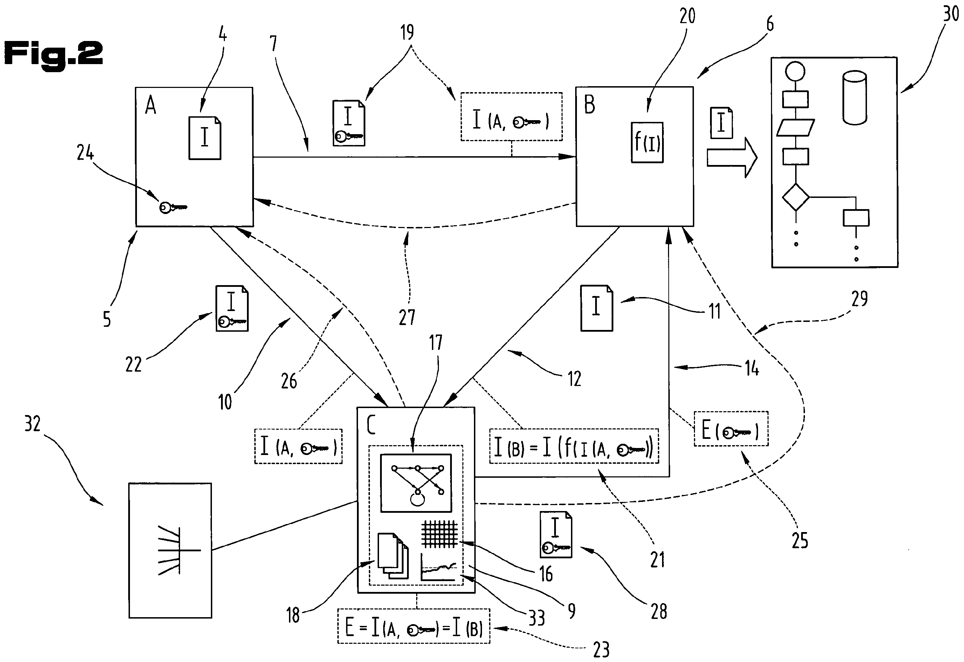

Durch das erfindungsgemäße Verfahren wird nun sichergestellt, dass eine Informationseinheit bzw. Steuerungsanweisung die von einer Datenquelle ausgegangen ist, unverändert bei der Datensenke angekommen ist. Auch lässt sich mit dem erfindungsgemäßen Verfahren eine gegenseitige Prüfung der Kommunikation zwischen den Modulen realisieren. Details dazu finden sich nachfolgend u.a. bei der Beschreibung der Fig. 2.

Nach anspruchsgemäßen Weiterbildungen ist es mit dem erfindungsgemäßen Verfahren jedoch auch möglich zu prüfen, ob hierarchische Zusammenhänge im Ablauf bzw. in der Abfolge der Transaktionen sowie im Kommunikationsfluss zwischen Datenquellen und Datensenken der Steuerungseinheit eingehalten wurden. Insbesondere lässt sich somit prüfen, ob die an das Transaktionsüberwachungsmodul übermittelten Informationseinheiten einer Datenquelle und Datensenke zuordenbar sind und somit einen gültigen Transaktionsablauf darstellen. Dazu können im Transaktionsüberwachungsmodul 9 bspw. eine Zuordnungstabelle 16, eine Transaktionssequenztabelle 17 sowie eine Transaktionsablauftabelle 18 hinterlegt sein. Mittels der Zuordnungstabelle 16 lässt sich eindeutig prüfen, ob die übermittelten Informationseinheiten der jeweiligen Datenquelle und Datensenke zugeordnet werden können. Somit kann nicht in missbräuchlicher Weise eine ungültige Informationseinheit eingeschleust werden. Die Transaktionssequenztabelle 17 erlaubt eine Prüfung des Ablaufs der Transaktionen dahingehend, dass eine Manipulation in der Abfolge von Transaktionen erkannt werden kann. Beispielsweise kann ein Manipulationsversuch darin bestehen, eine Transaktion auszulösen, die im aktuellen Betriebszustand nicht zulässig ist, um dadurch Zugriff auf das Steuerungssystem zu erlangen. In eine ähnliche Richtung zielt eine Überprüfung mittels einer Transaktionsablauftabelle, da ein Angreifer bspw. in eine laufende Transaktion einen Steuerbefehl einschleusen könnte, um somit wiederum Zugriff auf das Steuerungssystem zu erlangen. Mittels der Transaktionsablauftabelle können die aktuell ablaufenden Steuerungsanweisungen mit einem hinterlegten Referenzabbild verglichen werden. Diese Weiterbildungen haben nun alle den besonderen Vorteil, dass es einem Angreifer weitestgehend verunmöglicht wird, eine laufende transaktionsbasierte Ablaufsteuerung derart zu manipulieren, dass unbemerkt Zugriff auf übertragene Informationseinheiten erlangt bzw. das in missbräuchlicher Weise Steueranweisungen bzw. Informationseinheiten in das Steuerungssystem eingebracht bzw. verfälscht werden können.

Auf Basis der Vergleichsoperation 13 durch das Transaktionsüberwachungsmodul 9 können nun mehrere Aktionen ausgelöst werden. Bei einer korrekten Übereinstimmung kann bspw. ein Freigabesignal als Kontrollsignal 14 generiert werden, welches an die Ablaufsteuerung 1, insbesondere an die Ausführungseinheit 3 übermittelt wird und von dieser als Freigabesignal für die Ausführung weiterer Steuerungsschritte der laufenden Transaktion bzw. eine weitere Transaktion ausgelöst werden kann. Ebenso kann das Freigabesignal auch an die Datenquelle und/oder die Datensenke übermittelt werden, worauf auch diese weitere Steueranweisungen ausführen. An der Datensenke kann das Freigabesignal bspw. die Übernahme der empfangenen Informationseinheiten in eine Ausführungsvorrichtung bzw. einen Datenspeicher freigeben.

Kommt es bei der Vergleichsoperation zu einem Fehler, können von der Ablaufsteuerung sowie bspw. einer externen Sicherheitskontrolleinrichtung, Alarmmaßnahmen getroffen werden. Als Kontrollsignal 14 wird hierbei ein Alarmsignal abgegeben, um die fehlerhafte Übereinstimmung anzuzeigen. Eine mögliche Reaktion auf eine derartige Alarmierung könnte darin bestehen, dass von der Ablaufsteuerung 1, insbesondere von der Ausführungseinheit 3 alle laufenden Steuerungsanweisungen sowie die aktuelle Transaktion abgebrochen werden und die Ablaufsteuerung 1 sowie das Steuerungssystem 15 in einen Alarmzustand gebracht wird, in dem keine weiteren steuerungstechnischen Aktionen möglich sind. Gegebenenfalls können weitere externe Schutzmaßnahmen ergriffen werden, bspw. kann ein Zugriff bzw. ein Zutritt zum Steuerungssystem bzw. zur Ablaufsteuerung durch physische Maßnahmen verhindert werden. Gegebenenfalls auch die Alarmierung externer Sicherheitseinheiten möglich, um so ggf. Sicherheitspersonal zur Behebung der Störung zu alarmieren.

Als Kontrollsignal 14 kann jedoch auch ein bedingtes Alarmsignal abgegeben werden, um so Aktionen einleiten zu können, die eine Prüfung ermöglichen, ob es sich um einen tatsächlichen Manipulationsversuch handelt. Beim bestimmungsgemäßen Betrieb der Ablaufsteuerung kann es aufgrund von Störungen bei der Übertragung 7 zu einer Verfälschung der übertragenen datentechnischen Informationseinheit 4 kommen, wodurch es zu einem fehlerhaften Vergleich kommt. Durch ein bedingtes Alarmsignal kann nun die Ablaufsteuerung und/oder das Steuerungssystem 15 dahingehend beeinflusst werden, den aktuellen Steuerungsschritt der laufenden Transaktion bzw. die Transaktion selbst erneut durchzuführen. Ist die erneute Durchführung erfolgreich, kann der Alarmzustand aufgehoben werden und die weitere Abarbeitung der Transaktion ohne Einschränkung erfolgen.

Ein bedingtes Alarmsignal kann jedoch auch dazu verwendet werden, einem Angreifer einen erfolgreichen Manipulationsversuch vorzutäuschen, im Hintergrund jedoch entsprechende Alarmmaßnahmen treffen zu können. Beispielsweise kann durch das bedingte Alarmsignal die Ablaufsteuerung 1 in einer Alarmtransaktion verzweigen, die sich von einer regulären Transaktion dadurch unterscheidet, dass bspw. keine sinnvollen Nutzdaten bzw. Nutzsteuerungsinformationen übertragen werden. Somit sieht es für einen potenziellen Angreifer aus, als ob der Manipulationsversuch erfolgreich war, jedoch kann dieser aus der Manipulation keinen Gewinn erzielen, wobei ggf. auch Festsetzungsmaßnahmen gegen den Angreifer initiiert werden.

Zusätzlich kann das Transaktionsüberwachungsmodul beim Vergleich der Informationseinheiten auch die Informationseinheit prüfen bzw. analysieren, um somit Inhaltsbezogen eine bedingte Aktion auszulösen. Beispielsweise kann das erfindungsgemäße Verfahren in einem System zur Abwicklung eines hochsicheren Zahlungsverkehrs verwendet werden wobei sichergestellt sein muss, dass ein Angreifer durch einen einzelnen Manipulationsversuch keinen wesentlichen Schaden anrichten kann und ferner der Manipulationsversuch erkennbar ist. Weiters ist der Einsatz des erfindungsgemäßen Verfahrens in einem Betriebsleitsystem denkbar, um wesentliche systemkritische Komponenten sicher zu steuern. Ein Betriebsleitsystem kann Komponenten bzw. Module umfassen, bei denen eine Manipulation zu einer bedeutenden Gefahr für die Betriebs- und/oder Personensicherheit führen kann. Eine Informationseinheit umfasst zumeist auch Parameter, für die ein oder mehrere Grenzwerte hinterlegt sein können, bspw. in der Zuordnungstabelle. Das Transaktionsüberwachungsmodul kann die Parameter der Informationseinheit mittels einer Schwellwertanalysefunktion prüfen und bei Überschreitung eines Parametergrenzwerts ein bedingtes Alarmsignal auslösen, um somit bspw. eine zusätzliche Prüfung auszulösen. Bei einem Zahlungssystem kann ein Parameter bspw. die Transaktionssumme festlegen, wobei für diesen Parameter ab einer festgelegten Summe eine zusätzliche Autorisierung erforderlich wird. Beispielsweise kann dann von dem Transaktionsüberwachungsmodul ein Kommunikationsdienst aktiviert werden, über den eine Autorisierungsanfrage an eine befugte Person übermittelt wird, bspw. auf eine mobile Kommunikationsvorrichtung. Der Benutzer muss die Autorisierungsanfrage freigeben oder ablehnen, wobei das rückübermittelte Ergebnis in das Vergleichsergebnis des Transaktionsüberwachungsmoduls einfließt. Mehrere Grenzwerte je Parameter erlauben ferner die Realisierung eines abgestuften Reaktionsszenarios. So lassen sich bei einer Finanztransaktion unterschiedliche Summen hinterlegen, die unterschiedliche Autorisierungsstufen erforderlich machen, bei einer Modulsteuerung können unterschiedliche Reaktionsszenarien ausgelöst werden.

Bevorzugt ist das Kontrollsignal 14, insbesondere als Alarmsignal bzw. Freigabesignal, als datentechnisches Signal ausgebildet und kann somit auch Steuerinformationen bzw. Steueranweisungen übertragen. Dadurch kann das Transaktionsüberwachungsmodul spezifische, auf den durchgeführten Vergleich abgestimmte, Anweisungen übertragen, um so bspw. zusätzliche, über die Anweisungen der Informationseinheit hinausgehende Aktionen an der Datensenke auszulösen. Beispielsweise kann die Übertragung von der Datenquelle zur Datensenke die Informationseinheit nicht vollständig übertragen werden, bspw. fehlt ein Schlüssel zum Entpacken der Informationseinheit, so dass ein Angreifer durch Auffangen dieser Übertragung keinen Nutzen daraus erhält. Der vollständige Informationseinheit wird von der Datenquelle zum Transaktionsüberwachungsmodul übertragen, wobei dieses, unter Kenntnis der Aufspaltungsfunktion, die Informationseinheit aufspaltet, den fehlenden Teil extrahiert und an die Datensenke übermittelt.

Das Transaktionsüberwachungsmodul kann weitere Sicherheitsüberprüfungen integriert haben bzw. auf externe Prüfmodule zugreifen. Insbesondere ist es von Vorteil, wenn zusätzlich zur korrekten Übertragung zwischen den einzelnen Modulen 5, 6, 9, auch noch die Zulässigkeit der Übertragung bzw. die korrekte Abfolge der einzelnen Übertragungsschritte geprüft werden kann. Ein Angreifer könnte bspw. die Kommunikationswege von der Datenquelle zur Datensenke 7 und zum Transaktionsüberwachungsmodul 10 manipulieren, um so die Sicherheitsprüfung des Transaktionsüberwachungsmoduls zu überlisten. Das Transaktionsüberwachungsmodul 9 kann auf eine hinterlegte Zuordnungstabelle 16 zurückgreifen und prüfen, ob die aktuell ablaufende Transaktion für die auslösende Datenquelle zulässig ist bzw. ob die Datenquelle berechtigt ist, an diese Datensenke eine Informationseinheit zu übermitteln. Auch kann geprüft werden, ob hintereinander ablaufenden Transaktionen einen zulässigen Gesamtablauf darstellen, der bspw. in einer Transaktionssequenztabelle 17 und/oder einer Transaktionsablauftabelle 18 hinterlegt ist.

In einer Weiterbildung kann das Transaktionsüberwachungsmodul 9 eine Kommunikationsschnittstelle 32 aufweisen, um bei einer erkannten Abweichung vom vorgegebenen Verhalten bzw. beim Auftreten einer Alarmsituation, eine externe Einrichtung und/oder eine zuständige Verwaltungsperson zu alarmieren bzw. zu informieren. Die Schwellwertanalysefunktion kann bei Überschreiten eines Grenzwerts über die Schnittstelle 32 eine Bedienperson über den Vorgang informieren, wobei die Person ferner die Möglichkeit hat, durch eine Rückmeldung an die Ablaufsteuerung die Transaktion freizugeben oder abzubrechen bzw. einen Alarm auszulösen. Die Schnittstelle kann bspw. durch eine Anbindung an ein öffentliches Kommunikationsnetzwerk gebildet sein, die Informationsweiterleitung kann dann mittels einer Textinformation und/oder eine sprachgesteuerten automatisierten Kommunikationsabwicklung erfolgen. Diese Rückmeldung kann unabhängig an mehrere Module 5, 6, 9 erfolgen, um auch hier keinen single-point-of-failure zu bilden. Mit dem erfindungsgemäßen Verfahren wird zuverlässig verhindert, dass ein Angreifer durch Manipulation einer einzelnen Komponente erfolgreich sein kann. Eine Manipulation müsste an mehreren Stellen exakt synchronisiert erfolgen, was aufgrund der weiteren vorteilhaften Ausbildungen ganz wesentlich erschwert wird.

Von der Datensenke 6 wird ein Abbild 11 der übertragenen datentechnischen Informationseinheit 4 an das Transaktionsüberwachungsmodul 9 übermittelt. Dieses Abbild 11 kann nun in verschiedenster Art und Weise gebildet werden. Beispielsweise kann von der Datensenke die übermittelte 7 datentechnische Informationseinheit 4 als Kopie an das Transaktionsüberwachungsmodul 9 übermittelt werden. Es ist jedoch auch möglich, dass das Abbild als Ergebnis einer Datenübernahmeprüfung erstellt wird und somit bereits eine grundlegende Prüfung der Übertragung 7 durchgeführt werden kann. Des Weiteren ist es möglich, dass das Abbild aus einer Verschlüsselungsoperation erstellt wird, wobei der nachfolgende Vergleich nur dann erfolgreich sein wird, wenn das Transaktionsüberwachungsmodul die von der Datenquelle 5 übermittelte 10 datentechnische Informationseinheit 5 demselben Verschlüsselungsvorgang unterzieht und das so erhaltene Ergebnis mit dem übermittelten 12 Abbild 11 vergleicht. Ein potenzieller Angreifer wird möglicherweise in der Lage sein, die Übermittlung 7 zu beeinflussen. Die Datenquelle und insbesondere das Transaktionsüberwachungsmodul 9 wird ein Angreifer zumeist kaum manipulieren können, da diese Module zumeist in einer Umgebung mit erhöhtem Zutrittsschutz bzw. Zugriffschutz angeordnet sein werden. Ein Manipulationsversuch wird daher fehlschlagen, da die Bearbeitung der empfangenen datentechnischen Informationseinheit zur Erzeugung des Abbilds 11 ein anderes Ergebnis liefern wird, als dieselbe Operation angewendet auf die ursprüngliche Informationseinheit 4.

Fig. 2 zeigt ein Prinzipschaltbild des Ablaufs des erfindungsgemäßen Verfahrens, dargestellt an einem vereinfachten Kommunikationsmodell einer transaktionsbasierten Ablaufsteuerung. Dabei wird von einer Datenquelle 5 eine datentechnische Informationseinheit 4 an die Datensenke 6 übertragen 7. Die Datensenke 6 erzeugt aus der eingehenden Informationseinheit 19 ein Abbild 11 und übermittelt dieses erfindungsgemäß an das Transaktionsüberwachungsmodul 9. Die Abbildungsfunktion 20 erstellt das Abbild 11 aus der einlangenden Informationseinheit 19 bspw. dadurch, dass eine Kopie der Informationseinheit 19 erstellt wird. Es ist jedoch auch möglich, dass die Abbildungsfunktion 20 eine Dateneingangsprüfung durchführt und somit ein spezifisches Abbild erstellt wird, dass eine eindeutige Identifikation bzw. Zuordnung der Informationseinheit 19 zur Datensenke 6 bzw. auch zur Datenquelle 5 ermöglicht. Diese Abbildungsfunktion kann insbesondere dazu ausgebildet sein, die Informationseinheit 19 derart aufzubereiten, dass es einem Angreifer, der die Übertragungsstrecke 12 manipuliert hat, nicht möglich ist, aus dem Abbild 11 auf die ursprüngliche datentechnische Informationseinheit 19, insbesondere jedoch auf die Informationseinheit 4, rückschließen zu können. Das am Transaktionsüberwachungsmodul 9 eintreffende Abbild 11 lässt sich auch in einer symbolischen Beschreibung 21 darstellen. Die empfangene Informationseinheit I(b> ist gebildet durch ein Abbild fy) der von der Datensenke empfangenen Informationseinheit I(a>.

Neben der Übertragung 7 der datentechnischen Informationseinheit 4 von der Datenquelle 5 zur Datensenke 6, wird die datentechnische Informationseinheit 4 erfindungsgemäß auch an das Transaktionsüberwachungsmodul 9 übermittelt 10. Somit hat das Transaktionsüberwachungsmodul 9 sowohl die ursprüngliche datentechnische Informationseinheit von der Datenquelle, als auch ein Abbild der Informationseinheit von der Datensenke zur Verfügung. Das Transaktionsüberwachungsmodul 9 kann die beiden erhaltenen Informationseinheiten überprüfen und somit feststellen, ob die von der Datenquelle 4 empfangene Informationseinheit 21, mit dem von der Datensenke 6 empfangenen Abbild 11, übereinstimmt 23. Wurde das Abbild 11 gemäß einer Abbildungsfunktion 20 erstellt, hat auch das Transaktionsmodul 9 bevorzugt diese Abbildungsfunktion bzw. die inverse Funktion zur Verfügung, um die erhaltenen Informationseinheiten entsprechend aufbereiten und den Vergleich durchführen zu können.

Zur Erhöhung der Sicherheit kann bspw. von der Datenquelle 5 zusammen mit der datentechnischen Informationseinheit 4 ein Identifikationsmerkmal bzw. eine Informationsklassifizierung 24 mit übertragen werden. Dieses Merkmal 24 ist nun insbesondere derart ausgebildet, dass es eine eindeutige und unverwechselbare Identifizierung der Datenquelle 5 und/oder der datentechnischen Informationseinheit 4 ermöglicht. Bevorzugt ist das Merkmal 24 aus einer eindeutigen Kennung der Datenquelle 5 und/oder einem charakteristischen Abschnitt der Informationseinheit 4 gebildet. Somit ist sichergestellt, dass ein potenzieller Angreifer, ohne Kenntnis der Detailausbildung der Datenquelle 5, das Merkmal 24 nicht erstellen kann. Des Weiteren wird bevorzugt eine pseudozufällige Kennung mit integriert, die nur an der Datenquelle verfügbar ist und von einem Angreifer daher nicht herstellbar ist.

Bevorzugt wird das Merkmal 24 zusammen mit der Informationseinheit 4 an die Datensenke 6 übertragen 7,19 und ferner auch an das Transaktionsüberwachungsmodul 9 übertragen 10,22. Somit steht das eindeutige Merkmal sowohl der Datensenke 6, als auch dem Transaktionsüberwachungsmodul 9 zur Verfügung. In einer Ausbildung kann das Abbild 11 von der Datensenke 6 derart generiert werden, das auch im Abbild 11 das Merkmal bzw. ein Abbild des Merkmals integriert angeordnet ist. Das Transaktionsüberwachungsmodul 9 kann nun doppelt prüfen, ob die datentechnische Informationseinheit 4 bei der Übertragung von der Datenquelle 5 zur Datensenke 6 manipuliert wurde. Beispielsweise kann zuerst geprüft werden, ob das übertragene Merkmal übereinstimmt, um bei erfolgreicher Prüfung anschließend die korrekte Übertragung der Informationseinheit zu überprüfen.

Wurde vom Transaktionsüberwachungsmodul 9 eine korrekte Transaktion festgestellt, ist also sichergestellt, dass die datentechnische Informationseinheit 4 auf der Übertragungsstrecke 7 von der Datenquelle 5 zur Datensenke 6 unverändert übertragen wurde, wird vom Transaktionsüberwachungsmodul ein Kontrollsignal 14 generiert bzw. abgegeben. Dieses Kontrollsignal kann nun bspw. als zweistufiges Freigabesignal ausgebildet sein, es ist jedoch auch eine mehrstufige Ausbildung im Sinne einer bedingten Freigabe möglich. Das Kontrollsignal 14 kann bspw. von einem externen Kontroll- und Überwachungssystem ausgewertet werden, es ist jedoch auch die dargestellte Ausbildung möglich, nach der das Kontrollsignal 14 an die Datensenke 6 zurückgeführt wird. Durch Auswerten des Kontrollsignals 14 kann die Datensenke 6 feststellen, ob die empfangene Informationseinheit 19 bei der Übertragung 7 manipuliert wurde. Im positiven Fall einer nicht manipulierten Übertragung, kann die Datensenke mit den weiteren Verfahrensschritten der aktuell laufenden bzw. durchzuführenden Transaktion fortfahren. Beispielsweise kann die Informationseinheit 19 in eine Ausführungsvorrichtung 30 der Datensenke 6 übernommen 31 werden.

Das Kontrollsignal 14 kann bspw. auch das eindeutige Merkmal 24 hinterlegt haben 25. Die Datensenke 6 kann nun das von der Datenquelle 5 erhaltene Merkmal, mit dem vom Transaktionsüberwachungsmodul 9 erhaltenen Merkmal vergleichen, um somit die Übertragungsstrecke 10 zu prüfen. Durch diese Ausbildung wird eine Manipulation der Übertragung 7 von der Datenquelle 5 zur Datensenke ganz wesentlich erschwert, da ein potenzieller Angreifer zeitgleich mehrere Prüfinstanzen manipulieren müsste, um mit einem Manipulationsversuch Erfolg haben zu können. Insbesondere wird das Merkmal 24 derart ausgebildet sein, dass es auf nicht vorhersagbaren Eigenschaften der Datenquelle 5 beruht, die einem potenziellen Angreifer nicht zur Verfügung stehen. Bevorzugt weist das Merkmal 24 einen Zeitstempel auf, sodass sich eine Manipulation sofort in einem geänderten Zeitstempel auswirken würde, was den Manipulationsversuch augenscheinlich macht. Insbesondere sind Referenzen wie bspw. ein Zeitstempel derart in das Merkmal integriert, dass eine Extraktion zur Gewinnung der Referenz nicht, oder nur äußerst schwierig möglich ist, beispielsweise mittels eines Verschlüsselungsverfahren.

Insbesondere kann nun auch das Transaktionsüberwachungsmodul die von der Datenquelle 4 erhaltene Informationseinheit 22 an die Datensenke 6 übermitteln 29. Somit stehen der Datensenke sowohl die Informationseinheit 19 der Datenquelle 4 und die weitergeleitete Informationseinheit 28 des Transaktionsüberwachungsmoduls für einen Vergleich zur Verfügung, wodurch diese in der Lage ist, die korrekte Übertragung von der Datenquelle zum Transaktionsüberwachungsmodul zu prüfen und somit eine Manipulation der Übertragungsstrecke 10 weitestgehend auszuschließen.

In vorteilhaften Weiterbildungen kann bspw. auch vom Transaktionsüberwachungsmodul 9 an die Datenquelle 5 ein Prüfergebnis übermittelt 26 werden, gleiches gilt auch für die Übermittlung 27 eines Prüfsignals von der Datensenke 6 an die Datenquelle 5. Durch diese vorteilhaften Weiterbildungen ist es jederzeit möglich, dass innerhalb der vereinfacht dargestellten, dreieckigen Kommunikationsstruktur, ein Modul die Kommunikation zwischen den beiden anderen Modulen überprüft und somit eine Manipulation der jeweiligen Übertragungsstrecken weitestgehend ausgeschlossen werden kann. Da zusätzlich nach dem erfindungsgemäßen Verfahren auch die Prüfung der übertragenen Informationseinheiten stattfindet, wird es für einen potenziellen Angreifer außerordentlich schwierig die Übertragung zu manipulieren, da ein Manipulationsangriff an mehreren Stellen gleichzeitig und exakt koordiniert stattfinden müsste. Durch das erfindungsgemäße Verfahren kann eine Datensenke eindeutig und zuverlässig feststellen, dass eine empfangene Informationseinheit von einer autorisierten Datenquelle stammt und dass es am Übertragungsweg zu keiner Manipulation gekommen ist. Des Weiteren können die restlichen Komponenten jederzeit die verbleibenden Kommunikationswege bzw. Informationsübertragungen auf einen Manipulationsversuch überprüfen. Diese gegenseitige Prüfung nach dem erfindungsgemäßen Verfahren kann jederzeit auch auf ein Steuerungssystem bzw. ein Datenverarbeitungssystem ausgeweitet werden, das mehr als zwei Kommunikationspartner und auch mehrere Transaktionsüberwachungsmodule umfasst. Zusätzlich kann das Transaktionsüberwachungsmodul mit einer externen Autorisierungseinrichtung verbunden sein, welche bspw. einen erweiterten Satz an Regeln hinterlegt hat und so die Transaktionsabfolge und insbesondere die Plausibilität der ablaufenden Transaktion prüfen kann. Insbesondere bei einem komplexen System mit mehreren Transaktionsüberwachungsmodulen kann diese externe Einheit eine Kontrollaufgabe für das Gesamtsystem übernehmen, womit wiederum ein single-point-of-failure vermieden wird. Bevorzugt ist eine derartige Vorrichtung besonders gesichert und geschützt ausgebildet, wodurch ein besonders hoher Manipulationsschutz gegeben ist.

Die Ausführungsbeispiele zeigen mögliche Ausführungsvarianten des Verfahren zum Betrieb einer transaktionsbasierten Ablaufsteuerung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Verfahren zum Betrieb einer transaktionsbasierten Ablaufsteuerung dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 und 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transaktionsbasierte Ablaufsteuerung
- 2: Transaktionen
- 3: Ausführungseinheit
- 4: Datentechnische Informationseinheit
- 5: Datenquelle, Source S

- 6: Datensenke, Destination D
- 7: Übermittlung, Übertragungsstrecke
- 8: Durchführung der Steueranweisung
- 9: Transaktionsüberwachungsmodul
- 10: Übermittlung, Übertragungsstrecke

- 11: Abbild einer datentechnischen Informationseinheit
- 12: Übermittlung, Übertragungsstrecke
- 13: Vergleichsmodul
- 14: Kontrollsignal, Alarmsignal, Freigabesignal
- 15: Steuerungssystem

- 16: Zuordnungstabelle
- 17: Transaktionssequenztabelle
- 18: Transaktionsablauftabelle
- 19: Datentechnische Informationseinheit
- 20: Abbildungsfunktion

- 21: Symbolische Beschreibung der Informationseinheit
- 22: Datentechnische Informationseinheit
- 23: Übereinstimmungsprüfung
- 24: Identifikationsmerkmal, Informationsklassifizierung
- 25: Kontrollsignal

- 26: Übermittlung
- 27: Übermittlung
- 28: Informationseinheit
- 29: Übermittlung
- 30: Ausführungsvorrichtung

- 31: Ausführungskontrolle
- 32: Schnittstelle
- 33: Schwellwertanalyse

## Patentansprüche

1. Verfahren zum Betrieb einer transaktionsbasierten Ablaufsteuerung, wobei die Ablaufsteuerung (1) eine Mehrzahl von Transaktionen (2) hinterlegt hat, die von einer Ausführungseinheit (3) der Ablaufsteuerung (1) ausgeführt werden und dabei eine datentechnische Informationseinheit (4) von einer Datenquelle (5) zu einer Datensenke (6) übermittelt wird (7), wobei zusätzlich die gesendete datentechnische Informationseinheit (4) von der Datenquelle (5) an ein Transaktionsüberwachungsmodul (9) übermittelt (10) wird, **umfassend:**
- Übertragen mit der datentechnischen Informationseinheit (4) einer Informationsklassifizierung und/oder eines Identifikationsmerkmals der Datenquelle (5) von der Datenquelle (5) zur Datensenke (6) und zum Transaktionsüberwachungsmodul (9).
- Generieren eines Abbilds (11) der von der Datensenke (6) empfangenen datentechnischen Informationseinheit (4) aus der empfangenen datentechnischen Informationseinheit (4) und der Informationsklassifizierung und/oder des Identifikationsmerkmals der Datenquelle (5) mittels einer Abbildungsfunktion (20),
- Übermitteln (12) des Abbilds (11) der empfangenen datentechnischen Informationseinheit von der Datensenke (6) an das Transaktionsüberwachungsmodul (9),
- Vergleich (13) durch das Transaktionsüberwachungsmodul (9) der Informationsklassifizierung und/oder des Identifikationsmerkmals der Datenquelle (5) sowie der übermittelten datentechnischen Informationseinheit (4) mit dem Abbild (11), wobei bei einem fehlerhaften Vergleich vom Transaktionsüberwachungsmodul (9) ein Alarmsignal abgegeben wird und bei korrektem Vergleich ein Freigabesignal an die Datenquelle (5) und/oder die Datensenke (6) und/oder die Ablaufsteuerung (1) übermittelt wird.

2. Verfahren nach Anspruch 1, **dadurch gekennzeichnet, dass** zusammen mit der Informationseinheit eine Steueranweisung übermittelt wird.

3. Verfahren nach einem der Ansprüche 1 bis 2, **dadurch gekennzeichnet, dass** bei fehlerhaftem Vergleich vom Transaktionsüberwachungsmodul ein bedingtes Alarmsignal abgegeben wird.

4. Verfahren nach Anspruch 3, **dadurch gekennzeichnet, dass** durch ein bedingtes Alarmsignal an der Datenquelle und/oder an der Datensenke und/oder an der Ablaufsteuerung eine Alarmtransaktion ausgelöst wird.

5. Verfahren nach einem der Ansprüche 1 bis 4, **dadurch gekennzeichnet, dass** die Übertragung zwischen der Datenquelle und der Datensenke und/oder zwischen der Datenquelle und/oder der Datensenke und dem Transaktionsüberwachungsmodul verschlüsselt wird.

6. Verfahren nach einem der Ansprüche 1 bis 5, **dadurch gekennzeichnet, dass** mit dem Abbild der empfangenen datentechnischen Informationseinheit, eine Informationsklassifizierung und/oder ein Identifikationsmerkmal der Datensenke übertragen wird.

7. Verfahren nach einem der Ansprüche 5 oder 6, **dadurch gekennzeichnet, dass** das Transaktionsüberwachungsmodul die Informationsklassifizierung bzw. das Identifikationsmerkmal mit einer hinterlegten Zuordnungstabelle vergleicht.

8. Verfahren nach einem der Ansprüche 1 bis 7, **dadurch gekennzeichnet, dass** das Transaktionsüberwachungsmodul eine Transaktions-Ablaufprüfung durchführt.

9. Verfahren nach einem der Ansprüche 1 bis 8, **dadurch gekennzeichnet, dass** das Transaktionsüberwachungsmodul eine Sequenzprüfung durchführt.

10. Verfahren nach einem der Ansprüche 1 bis 9, **dadurch gekennzeichnet, dass** das Transaktionsüberwachungsmodul eine Ablaufanweisung an die Ablaufsteuerung und/oder die Datensenke übermittelt.

11. Verfahren nach einem der Ansprüche 1 bis 10, **dadurch gekennzeichnet, dass** das Transaktionsüberwachungsmodul die von der Datenquelle empfangene Informationseinheit an die Datensenke übermittelt.

12. Verfahren nach Anspruch 11, **dadurch gekennzeichnet, dass** die Datensenke die von der Datenquelle und die vom Transaktionsüberwachungsmodul erhaltene Informationseinheit vergleicht und bei Übereinstimmung die Informationseinheit an eine Ausführungsvorrichtung der Datensenke weiterleitet.

## Claims

1. Method for operating a transaction-based sequence control, wherein the sequence control (1) has stored a plurality of transactions (2) executed by an execution unit (3) of the sequence control (1) and in the process a data-based information unit (4) is transmitted (7) from a data source (5) to a data sink (6), wherein the sent data-based information unit (4) is additionally transmitted (10) from the data source (5) to a transaction monitoring module (9), comprising:
- transferring an information classification and/or an identification feature of the data source (5), together with the data-based information unit (4), from the data source (5) to the data sink (6) and to the transaction monitoring module (9),
- generating an image (11) of the data-based information unit (4) received by the data sink (6), from the received data-based information unit (4), and of the information classification and/or the identification feature of the data source (5) by means of an imaging function (20),
- transmitting (12) the image (11) of the received data-based information unit from the data sink (6) to the transaction monitoring module (9),
- comparing (13), by means of the transaction monitoring module (9), the information classification and/or the identification feature of the data source (5) and the transmitted data-based information unit (4) with the image (11), wherein an alarm signal is emitted when there is an erroneous comparison by the transaction monitoring module (9) and an enabling signal is transmitted to the data source (5) and/or the data sink (6) and/or the sequence control (1) when there is a correct comparison.

2. Method according to claim 1, **characterized in that** a control instruction is transmitted together with the information unit.

3. Method according to either claim 1 or claim 2, **characterized in that** a conditional alarm signal is emitted when there is an erroneous comparison by the transaction monitoring module.

4. Method according to claim 3, **characterized in that** an alarm transaction is triggered by a conditional alarm signal to the data source and/or to the data sink and/or to the sequence control.

5. Method according to any of claims 1 to 4, **characterized in that** the transfer between the data source and the data sink and/or between the data source and/or the data sink and the transaction monitoring module is encrypted.

6. Method according to any of claims 1 to 5, **characterized in that** an information classification and/or an identification feature of the data sink is transmitted together with the image of the received data-based information unit.

7. Method according to either claim 5 or claim 6, **characterized in that** the transaction monitoring module compares the information classification and/or the identification feature with a stored cross-reference list.

8. Method according to any of claims 1 to 7, **characterized in that** the transaction monitoring module carries out a transaction/sequence check.

9. Method according to any of claims 1 to 8, **characterized in that** the transaction monitoring module carries out a sequence check.

10. Method according to any of claims 1 to 9, **characterized in that** the transaction monitoring module transmits a sequence instruction to the sequence control and/or the data sink.

11. Method according to any of claims 1 to 10, **characterized in that** the transaction monitoring module transmits the information unit received by the data source to the data sink.

12. Method according to claim 11, **characterized in that** the data sink compares the information unit obtained by the data source and the information unit obtained by the transaction monitoring module and, when these correspond, forwards the information unit to an execution device of the data sink.

## Revendications

1. Procédé pour faire fonctionner une commande séquentielle basée sur des transactions, dans lequel la commande séquentielle (1) a mémorisé une pluralité de transactions (2) qui sont exécutées par une unité d'exécution (3) de la commande séquentielle (1), une unité d'information de technique des données (4) étant alors transmise (7) d'une source de données (5) à un collecteur de données (6), dans lequel l'unité d'information de technique des données (4) envoyée est également transmise (10) de la source de données (5) à un module de surveillance des transactions (9), comprenant les étapes consistant à :
- transmettre avec l'unité d'information de technique des données (4) une classification d'information et/ou une caractéristique d'identification de la source de données (5) de la source de données (5) au collecteur de données (6) et au module de surveillance des transactions (9),
- générer une représentation (11) de l'unité d'information de technique des données (4) reçue par le collecteur de données (6) à partir de l'unité d'information de technique des données (4) reçue et de la classification d'information et/ou de la caractéristique d'identification de la source de données (5) au moyen d'une fonction de représentation (20),
- transmettre (12) la représentation (11) de l'unité d'information de technique des données reçue du collecteur de données (6) au module de surveillance des transactions (9),
- comparer (13) à l'aide du module de surveillance des transactions (9) la classification d'information et/ou la caractéristique d'identification de la source de données (5) ainsi que l'unité d'information de technique des données (4) transmise avec la représentation (11), un signal d'alarme étant émis par le module de surveillance des transactions (9) en cas de comparaison erronée et un signal de validation étant transmis à la source de données (5) et/ou au collecteur de données (6) et/ou à la commande séquentielle (1) en cas de comparaison correcte.

2. Procédé selon la revendication 1, **caractérisé en ce qu'**une instruction de commande est transmise avec l'unité d'information.

3. Procédé selon l'une des revendications 1 à 2, **caractérisé en ce qu'**un signal d'alarme conditionnel est émis par le module de surveillance des transactions en cas de comparaison erronée.

4. Procédé selon la revendication 3, **caractérisé en ce qu'**une transaction d'alarme est déclenchée par un signal d'alarme conditionnel à la source de données et/ou au collecteur de données et/ou à la commande séquentielle.

5. Procédé selon l'une des revendications 1 à 4, **caractérisé en ce que** la transmission entre la source de données et le collecteur de données et/ou entre la source de données et/ou le collecteur de données et le module de surveillance des transactions est cryptée.

6. Procédé selon l'une des revendications 1 à 5, **caractérisé en ce qu'**une classification d'information et/ou une caractéristique d'identification du collecteur de données est transmise avec la représentation de l'unité d'information de technique des données reçue.

7. Procédé selon l'une des revendications 5 ou 6, **caractérisé en ce que** le module de surveillance des transactions compare la classification d'information ou la caractéristique d'identification avec une table de correspondance mémorisée.

8. Procédé selon l'une des revendications 1 à 7, **caractérisé en ce que** le module de surveillance des transactions effectue un contrôle de déroulement des transactions.

9. Procédé selon l'une des revendications 1 à 8, **caractérisé en ce que** le module de surveillance des transactions effectue un contrôle séquentiel.

10. Procédé selon l'une des revendications 1 à 9, **caractérisé en ce que** le module de surveillance des transactions transmet une instruction de déroulement à la commande séquentielle et/ou au collecteur de données.

11. Procédé selon l'une des revendications 1 à 10, **caractérisé en ce que** le module de surveillance des transactions transmet l'unité d'information reçue de la source de données au collecteur de données.

12. Procédé selon la revendication 11, **caractérisé en ce que** le collecteur de données compare l'unité d'information reçue de la source de données et l'unité d'information reçue du module de surveillance des transactions et, en cas de correspondance, transmet l'unité d'information à un dispositif d'exécution du collecteur de données.
